# EUROPÄISCHE PATENTSCHRIFT

(11) **EP 1 859 474 B1**
(45) Veröffentlichungstag und Bekanntmachung des Hinweises auf die Patenterteilung: **06.01.2010**
(21) Anmeldenummer: 06705943.6
(22) Anmeldetag: 09.02.2006
(51) Int. Cl.: H01K 1/50

(54) **HALOGENGLÜHLAMPE**
INCANDESCENT HALOGEN LAMP
LAMPE A INCANDESCENCE HALOGENE

(30) Priorität: 16.03.2005 DE 102005012487
(43) Veröffentlichungstag der Anmeldung: 28.11.2007
(73) Patentinhaber: Osram Gesellschaft mit beschränkter Haftung, 81543 München (DE)
(72) Erfinder: WITTMANN, Klaus, 89567 Sontheim (DE); ZELT, Sascha, 89075 Ulm (DE)
(74) Vertreter: Raiser, Franz
(86) Internationale Anmeldenummer: PCT/DE2006/000223
(87) Internationale Veröffentlichungsnummer: WO 2006/097058

(56) Entgegenhaltungen:
- EP-A- 0 370 318
- EP-A- 1 134 787
- EP-A- 1 255 279
- US-A- 4 020 380

## Beschreibung

Die Erfindung betrifft eine Halogenglühlampe gemäß dem Oberbegriff des Patentanspruchs 1.

### I. Stand der Technik

Eine derartige Halogenglühlampe ist beispielsweise in der EP 0 370 318 A2 offenbart. Diese Schrift beschreibt eine Halogenglühlampe für den Betrieb bei hohen Temperaturen, die ein lichtdurchlässiges Lampengefäß und einen darin angeordneten Wolframglühfaden sowie eine innerhalb des Lampengefäßes angeordnete Füllung aufweist, wobei die Füllung eine Mischung von Kohlenstoff, Wasserstoff, Inertgas, Phosphor, Chlor und Brom umfasst. Das Molverhältnis der kombinierten Gesamtmenge des Chlors und Broms zum Kohlenstoff ist größer als 1 und das Molverhältnis des Phosphors zur kombinierten Gesamtmenge von Chlor und Brom liegt im Bereich von 0,5 bis 2. Als Inertgas werden die Gase Stickstoff, Xenon, Krypton, Argon oder Helium vorgeschlagen.

In der EP 1 255 279 A2 ist eine Miniaturhalogenglühlampe beschrieben, deren Füllung einen Kaltfülldruck im Bereich von 0,5 Megapascal bis 3 Megapascal besitzt und deren Edelgaskomponente aus Xenon besteht, um die Wolframabdampfrate von dem Wolframglühfaden möglichst gering zu halten. Die Verwendung des Edelgases Xenon als Füllungskomponente ist bei Lampengefäßen mit großem Volumen kostspielig.

### II. Darstellung der Erfindung

Es ist Aufgabe der Erfindung, eine gattungsgemäße Halogenglühlampe bereitzustellen, die mit unterschiedlichen Leistungen betrieben werden kann. ohne dass während ihrer Lebensdauer eine nennenswerte Schwärzung des Lampengefäßes auftritt.

Diese Aufgabe wird erfindungsgemäß durch die Merkmale des Patentanspruchs 1 gelöst. Besonders vorteilhafte Ausführungen der Erfindung sind in den abhängigen Patentansprüchen beschrieben.

Die erfindungsgemäße Halogenglühlampe weist mindestens einen, innerhalb eines lichtdurchlässigen Lampengefäßes angeordneten Wolframglühfaden und eine Füllung in dem Lampengefäß auf, wobei die Füllung eine Halogenkomponente für einen Halogenkreisprozess und eine Edelgaskomponente umfasst. Erfindungsgemäß ist der Kaltfülldruck innerhalb des Lampengefäßes größer oder gleich 0,7 Megapascal und die Edelgaskomponente umfasst Krypton oder Xenon bei einem Partialdruck größer oder gleich 20% des Kaltfülldrucks und mindestens ein weiteres Edelgas, dessen Atome einen kleineren Atomradius als Kryptonatome besitzen, wobei das weitere Edelgas Argon umfasst und der Partialdruck von Argon kleiner oder gleich 80% des Kaltfülldrucks ist.

Dadurch wird gewährleistet, dass die Halogenglühlampe mit unterschiedlichen Leistungen, ohne nennenswerte Schwärzung des Lampengefäßes betreibbar ist. Der hohe Kaltfülldruck in Kombination mit dem Edelgas Krypton oder Xenon tragen zu einer geringen Wolframabdampfrate von dem Wolframglühfaden bei. Zusätzlich zum Krypton oder Xenon umfasst die Edelgaskomponente ein weiteres Edelgas, dessen Atome einen kleineren Atomradius als Kryptonatome besitzen. Es hat sich gezeigt, dass durch dieses weitere Edelgas der Wärmetransport von dem mindestens einen Wolframglühfaden zu dem Lampengefäß verbessert wird. Dadurch wird eine ausreichende Aufheizung des Lampengefäßes auch während des Dimmbetriebs der Lampe bzw. während des Betriebs mit reduzierter Leistung sowie bei nur kurzzeitiger Betriebsdauer der Lampe gewährleistet, um den Halogenkreisprozess während der vorgenannten Betriebszustände bzw. Betriebsphasen aufrecht zu erhalten und eine Schwärzung des Lampengefäßes zu vermeiden.

Die erfindungsgemäße Halogenglühlampe eignet sich daher besonders gut zum Einsatz als Lichtquelle in einem statischen Kurvenlicht, das im Fahrzeugscheinwerfer nur kurzzeitig, zum Ausleuchten der Seitenstraße während des Abbiegens, beim langsamen Durchfahren einer Kurve, oder als Einparkhilfe eingeschaltet ist. Außerdem eignet sich die erfindungsgemäße Halogenglühlampe auch zum kombinierten Einsatz als Tagfahrlichtlampe und als Positionslichtlampe. Tagsüber wird diese Halogenglühlampe an der Bordnetzspannung des Kraftfahrzeugs von beispielsweise 12 Volt als Tagfahrlichtlampe und nachts mit ca. der halben Bordnetzspannung von ca. 6 Volt als Positionslichtlampe betrieben.

Vorzugsweise wird kein Xenon, sondern nur Krypton mit dem weiteren Edelgas Argon verwendet. Argon trägt zu einer Verbesserung des Wärmetransports in dem oben genannten Sinn bei. Gemäß einem ersten bevorzugten Ausführungsbeispiel der Erfindung wird neben Krypton als weiteres Edelgas Argon verwendet, wobei der Partialdruck des Edelgases Argon kleiner oder gleich 80 Prozent des Kaltfülldrucks im Lampengefäß ist. Gemäß einem zweiten bevorzugten Ausführungsbeispiel der Erfindung werden neben Krypton sowohl Neon als auch Argon als weitere Edelgase verwendet.

Der Partialdruck des Edelgases Krypton bzw. Xenon ist größer oder gleich 20 Prozent des Kaltfülldrucks, um die Wolframabdampfrate von dem mindestens einen Wolframglühfaden gering zu halten.

Der Anteil der Halogenatome in der Füllung liegt vorteilhafterweise im Bereich von 100 ppm (parts per million) bis 600 ppm, um einen Halogenkreisprozess zu ermöglichen. Eine zu hohe Konzentration oder Dosierung der Halogenkomponente kann eine Belagsbildung am Lampengefäß bzw. Materialabtrag an relativ kalten Metallstellen verursachen.

Um Verunreinigungen innerhalb des Lampengefäßes zu beseitigen, die beispielsweise während der Lampenherstellung in das Lampengefäß gelangt sind, ist innerhalb des Lampengefäßes vorteilhafterweise Phosphor oder eine Phosphorverbindung als Getter angeordnet.

Das Lampengefäß kann mit einer Beschichtung versehen sein, die einen Teil der von dem mindestens einen Wolframglühfaden generierten elektromagnetischen Strahlung absorbiert oder in das Lampengefäß zurückreflektiert, um das Lampengefäß während des Betriebs weiter aufzuheizen. Bei dieser Beschichtung handelt es sich beispielsweise um ein lichtdurchlässiges Interferenzfilter auf der äußeren Oberfläche des Lampengefäßes, das die von dem Wolframglühfaden emittierte Infrarotstrahlung in das Lampengefäß zurückreflektiert und eine zusätzliche Aufheizung der Lampe gewährleistet. Die Beschichtung kann stattdessen aber auch als lichtdurchlässiger Wärmestaubelag ausgebildet sein, der die Infrarotstrahlung absorbiert und auf diese Weise zu einer Aufheizung des Lampengefäßes beiträgt. Zu diesem Zweck kann das Lampengefäß beispielsweise eine geeignete Farbgebung aufweisen.

### III. Beschreibung der bevorzugten Ausführungsbeispiele

Nachstehend wird die Erfindung anhand von zwei bevorzugten Ausführungsbeispielen näher erläutert.

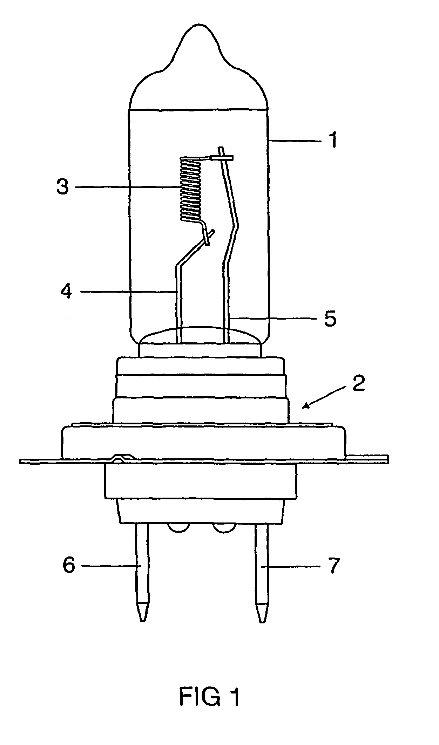

Die Figur zeigt eine schematische Darstellung des Aufbaus der Halogenglühlampen gemäß der bevorzugten Ausführungsbeispiele. Bei diesen Halogenglühlampen handelt es sich um sogenannte H8-Lampen, die zum Betrieb an einer Nennspannung von 12 Volt in einem Kraftfahrzeug vorgesehen sind. Die maximale Leistungsaufnahme dieser Lampen beträgt bei einer Betriebsspannung von 13,2 Volt nur 43 Watt.

Die Halogenglühlampen gemäß der bevorzugten Ausführungsbeispiele besitzen ein gläsernes, im wesentlichen zylindrisches Lampengefäß 1, das an einem Ende mit einem Sockel 2 versehen ist. Innerhalb des Lampengefäßes 1 ist eine axial ausgerichtete Glühwendel 3 angeordnet, deren mit einem Molybdänröhrchen umhüllte Wendelabgänge jeweils mit einem Stromzuführungsdraht 4, 5 verschweißt sind. Die beiden Stromzuführungsdrähte 4, 5 sind jeweils elektrisch leitend mit einem elektrischen Anschluss 6, 7 des Sockels 2 verbunden. Das Lampengefäß 1 besteht aus Quarzglas oder einem Hartglas, beispielsweise Alumosilikatglas.

Innerhalb des Lampengefäßes 1 ist eine Füllung angeordnet, die eine Halogenkomponente und eine Edelgaskomponente aufweist. Außerdem ist innerhalb des Lampengefäßes 1 bei allen Ausführungsbeispielen ein Phosphorgetter angeordnet.

Gemäß dem ersten Ausführungsbeispiel der Erfindung besteht die Edelgaskomponente aus den Edelgasen Krypton und Argon. Der gesamte Kaltfülldruck, das heißt, der gesamte Fülldruck bei Zimmertemperatur (ca. 22°C) beträgt 1,2 Megapascal. Der Partialdruck des Argons beträgt 0,9 Megapascal. Der Anteil der Halogenatome in der Füllung, vorzugsweise Brom, Jod und Chlor, beträgt 450 ppm. Der Rest der Füllung ist Krypton.

Gemäß dem zweiten Ausführungsbeispiel der Erfindung besteht die Edelgaskomponente aus den Edelgasen Krypton, Neon und Argon. Der gesamte Kaltfülldruck beträgt 1,2 Megapascal. Der Partialdruck von Krypton und Neon beträgt jeweils 0,3 Megapascal. Der Anteil der Halogenatome in der Füllung, vorzugsweise Brom, Jod und Chlor, beträgt 450 ppm. Der Rest der Füllung ist Argon.

Die Erfindung beschränkt sich nicht auf die oben näher erläuterten Ausführungsbeispiele. Beispielsweise kann der Kaltfülldruck auch deutlich höhere Werte aufweisen. Außerdem kann anstelle des Edelgases Krypton bei den oben erläuterten Ausführungsbeispielen auch Xenon oder eine Mischung von Xenon und Krypton verwendet werden.

## Patentansprüche

1. Halogenglühlampe mit mindestens einem, innerhalb eines lichtdurchlässigen Lampengefäßes (1) angeordneten Wolframglühfaden (3) und einer Füllung in dem Lampengefäß (1), die eine Halogenkomponente für einen Halogenkreisprozess und eine Krypton oder Xenon enthaltende Edelgaskomponente umfasst, wobei der Kaltfülldruck innerhalb des Lampengefäßes (1) größer oder gleich 0,7 Megapascal ist und der Partialdruck von Krypton oder Xenon größer oder gleich 20 Prozent des Kaltfülldrucks ist, **dadurch gekennzeichnet, dass** die Edelgaskomponente mindestens ein weiteres Edelgas umfasst, dessen Atome einen kleineren Atomradius als Kryptonatome besitzen, wobei das weitere Edelgas Argon ist und der Partialdruck von Argon kleiner oder gleich 80 Prozent des Kaltfülldrucks ist.

2. Halogenglühlampe nach Anspruch 1, **dadurch gekennzeichnet, dass** als weiteres Edelgas zusätzlich Neon in dem Lampengefäß (1) enthalten ist.

3. Halogenglühlampe nach Anspruch 1, **dadurch gekennzeichnet, dass** der Anteil der Halogenatome in der Füllung in dem Bereich von 100 ppm bis 600 ppm liegt.

4. Halogenglühlampe nach Anspruch 1, **dadurch gekennzeichnet, dass** innerhalb des Lampengefäßes (1) Phospor oder eine Phosphorverbindung als Getter angeordnet ist.

5. Halogenglühlampe nach Anspruch 1, **dadurch gekennzeichnet, dass** das Lampengefäß (1) mit einer Beschichtung versehen ist, die einen Teil der von dem mindestens einen Wolframglühfaden (3) generierten elektromagnetischen Strahlung absorbiert oder in das Lampengefäß (1) zurückreflektiert.

6. Verwendung einer Halogenglühlampe gemäß einem oder mehreren der Ansprüche 1 bis 5 in einer Fahrzeugleuchte.

7. Verwendung einer Halogenglühlampe nach Anspruch 6 als Kurvenlichtlampe.

8. Verwendung einer Halogenglühlampe nach Anspruch 6 als Tagfahrlichtlampe oder bzw. und Positionslichtlampe.

## Claims

1. Halogen incandescent lamp having at least one tungsten incandescent filament (3), which is arranged within a transparent lamp vessel (1), and a filling in the lamp vessel (1) which comprises a Halogen component for a halogen cycle process and a krypton-containing or xenon-containing noble gas component, the coldfilling pressure within the lamp vessel (1) being greater than or equal to 0.7 megapascal, and the partial pressure of krypton or xenon being greater than or equal to 20 percent of the coldfilling pressure, **characterized in that** the noble gas component comprises at least one further noble gas, whose atoms have a smaller atom radius than krypton atoms, the further noble gas being argon, and the partial pressure of argon being less than or equal to 80 percent of the coldfilling pressure.

2. Halogen incandescent lamp according to Claim 1, **characterized in that** additionally neon is contained in the lamp vessel (1) as the further noble gas.

3. Halogen incandescent lamp according to Claim 1, **characterized in that** the content of the halogen atoms in the filling is in the range of from 100 ppm to 600 ppm.

4. Halogen incandescent lamp according to Claim 1, **characterized in that** phosphorus or a phosphorus compound is arranged as getter within the lamp vessel (1).

5. Halogen incandescent lamp according to Claim 1, **characterized in that** the lamp vessel (1) is provided with a coating which absorbs some of the electromagnetic radiation generated by the at least one tungsten incandescent filament (3) or reflects it back into the lamp vessel (1).

6. Use of a halogen incandescent lamp according to one or more of Claims 1 to 5 in a vehicle luminaire.

7. Use of a halogen incandescent lamp according to Claim 6 as a cornering light lamp.

8. Use of a halogen incandescent lamp according to Claim 6 as a daytime running light lamp and/or a position light lamp.

## Revendications

1. Lampe à incandescence aux halogènes, ayant au moins un filament ( 3 ) incandescent en tungstène disposé à l'intérieur d'une enceinte ( 1 ) de lampe transparente et un remplissage de l'enceinte ( 1 ) de la lampe, qui comprend un constituant halogéné pour un processus de cycle d'halogène et un constituant de gaz rare contenant du krypton ou du xénon, la pression de remplissage à froid à l'intérieur de l'enceinte ( 1 ) de la lampe étant supérieure ou égale à 0,7 mégapascal et la pression partielle du krypton ou du xénon étant supérieure ou égale à 20% de la pression de remplissage à froid, **caractérisée en ce que** le constituant de gaz rare comprend au moins un autre gaz rare, dont les atomes ont un rayon atomique plus petit que celui de l'atome de krypton, l'autre gaz rare étant de l'argon et la pression partielle de l'argon étant inférieure ou égale à 80% de la pression de remplissage à froid.

2. Lampe à incandescence aux halogènes, suivant la revendication 1, **caractérisée en ce que** du néon est contenu supplémentairement comme autre gaz rare dans l'enceinte ( 1 ) de la lampe.

3. Lampe à incandescence aux halogènes, suivant la revendication 1, **caractérisée en ce que** la proportion des atomes d'halogènes du remplissage est comprise entre 100 ppm et 600 ppm.

4. Lampe à incandescence aux halogènes, suivant la revendication 1, **caractérisée en ce que** du phosphore ou un composé phosphoré est disposé comme getter à l'intérieur de l'enceinte ( 1 ) de la lampe.

5. Lampe à incandescence aux halogènes, suivant la revendication 1, **caractérisée en ce que** l'enceinte ( 1 ) de la lampe est munie d'un revêtement qui absorbe une partie du rayonnement électromagnétique produit par le au moins un filament ( 3 ) incandescent de tungstène ou la réfléchit dans l'enceinte ( 1 ) de la lampe.

6. Utilisation d'une lampe à incandescence aux halogènes, suivant l'une ou plusieurs des revendications 1 à 5 dans un éclairage de véhicule automobile.

7. Utilisation d'une lampe à incandescence aux halogènes, suivant la revendication 6 comme feu en virage.

8. Utilisation d'une lampe à incandescence aux halogènes, suivant la revendication 6, comme lampe de feu en conduite de jour ou comme lampe de feu de position.
